# FASCICULE DE BREVET EUROPEEN

(11) **EP 1 114 582 B1**
(45) Date de publication et mention de la délivrance du brevet: **18.12.2002**
(21) Numéro de dépôt: 00420264.4
(22) Date de dépôt: 20.12.2000
(51) Int. Cl.: A01K 3/00, H01B 5/10, H01B 5/00

(54) **Clôture électrique**
Elektrozaun
Electric fence

(30) Priorité: 04.01.2000 FR 0000027
(43) Date de publication de la demande: 11.07.2001
(73) Titulaire: Bellon, Jean-Michel, 01480 Messimy Sur Saone (FR)
(72) Inventeur: Bellon, Jean-Michel, 01480 Messimy Sur Saone (FR)
(74) Mandataire: Vuillermoz, Bruno

(56) Documents cités:
- FR-A- 2 474 276
- GB-A- 1 585 602
- US-A- 4 162 783
- US-A- 5 203 542

## Description

L'invention concerne une clôture électrique plus particulièrement destinée au parcage d'animaux.

De plus en plus, de telles clôtures mettant en oeuvre des cordons ou rubans de clôture, permettent aux utilisateurs de garder les animaux avec beaucoup plus de sécurité que les autres clôtures, telles que celles réalisées notamment en fil de fer barbelé.

En effet, de par la haute tension véhiculée par les conducteurs électriques, on limite la majorité des risques de blessures des animaux, tout en leur imposant un respect des limites définies. De fait, très rapidement, les animaux apprennent à distinguer une clôture électrique d'une clôture non électrique.

Ainsi, un périmètre protégé peut être défini de manière précise, selon le choix des utilisateurs en tenant compte des spécificités propres à chacun.

Cependant, l'évolution du monde agricole impose la mise en oeuvre de parcelles de plus en plus grandes, et corollairement de périmètre de plus en plus long, et partant des distances d'électrification de plus en plus importantes.

Or, on doit tenir compte, pour de telles distances, de la tension disponible en tout point de la clôture, y compris les plus éloignés de la source d'énergie, de telle sorte à conserver à la clôture, quel que soit le lieu, ses qualités répulsives, afin de lui conserver sa fiabilité.

A cet effet, les électrificateurs ont fait l'objet de nombreux développements puisqu'on a ainsi pu faire croître leur puissance, tout en augmentant leur fiabilité. De fait, les électrificateurs délivrant une tension de 10 000 Volts, voire plus, sont aujourd'hui disponibles sur le marché. Leur fiabilité est en outre optimisée de par la mise en oeuvre de l'électronique intégrée dans de tels appareils.

Le facteur limitant est donc constitué par les cordons et rubans pour clôtures électriques qui se heurtent à différents problèmes.

Ainsi, pour les clôtures de longueur importante, elles doivent tout à la fois proposer une résistance mécanique élevée, une haute conductivité électrique et par ailleurs, une durée de vie relativement importante.

La conductivité électrique élevée s'impose pour des clôtures de grande longueur, pour lesquelles on souhaite pouvoir disposer en tout point de celle-ci, même aux endroits les plus éloignés de la source d'énergie, de la tension nominale délivrée par celle-ci ou d'une valeur suffisante et adaptée à chaque animal (par exemple vache : 2.500 V, cheval : 1.500 V, moutons : 4000 V). Ainsi, avec des matériaux à résistivité électrique relativement élevée, on aboutit à des impulsions de tension insuffisante pour conférer à ladite clôture son caractère dissuasif et répulsif, vis à vis des animaux parqués.

Le cuivre s'avère tout particulièrement adapté pour remplir cette exigence. Malheureusement, il est beaucoup trop fragile et est très vis attaqué par la corrosion, de sorte que son utilisation seule est exclue.

De fait, il est quelque fois proposé avec une protection, telle que par exemple un revêtement de zinc, de nickel ou d'étain, et même parfois d'argent. Cependant la corrosion apparaît a plus ou moins brève échéance.

Cette corrosion peut en outre être accélérée par des facteurs externes, tels que la pollution, les brouillards salins, les pesticides et autres produits chimiques utilisés dans l'agriculture.

L'aluminium présente quant à lui une résistivité électrique plus importante que celle du cuivre, mais cependant très largement suffisante pour l'application envisagée.

Cependant, ces deux métaux présentent des caractéristiques mécaniques, notamment en charge de rupture et capacité d'allongement tout à fait incompatibles avec l'application aux clôtures électriques, résistance mécanique qui constitue l'une des exigences requises pour les conducteurs électriques mis en oeuvre au niveau de ladite clôture. Il convient en effet de rappeler que ces clôtures sont appelées à subir de multiples modifications de par les différentes configurations possibles des herbages ou des parcelles, qui entraînent des repliages ou rembobinages des fils relativement fréquents, provoquant de fait des contraintes mécaniques locales dans un sens, puis dans l'autre, aboutissant assez fréquemment à la coupure des conducteurs métalliques, le plus souvent indétectable lorsque ces éléments métalliques sont intégrés dans un support synthétique.
Ces coupures engendrent des altérations locales, voire une annulation totale de la conduction électrique à certains points de la clôture, altérant donc de manière rédhibitoire son efficacité.

Il a donc été proposé de mettre en oeuvre des fils métalliques conducteurs réalisés en acier inoxydable, compte-tenu des propriétés mécaniques de ce matériau, et notamment de sa capacité d'allongement.

Malheureusement, l'acier inoxydable présente une résistivité électrique relativement élevée, altérant de fait la bonne conductivité électrique et la rendant incompatible avec sa mise en oeuvre pour des clôtures de grandes dimensions, sauf à utiliser plusieurs électrificateurs, ce qui augmenterait alors considérablement le coût d'une telle clôture électrique.

L'utilisateur doit donc faire un choix entre une bonne conductivité électrique et une durée de vie qui soit à la fois suffisante et économiquement viable dans l'environnement dans lequel les conducteurs électriques sont appelés à être soumis.

Afin de pallier ces inconvénients, diverses solutions ont été proposées.

L'une d'elles, par exemple décrite dans le document EP-A-0 256 841, propose d'associer au sein d'une même clôture électrique deux types de conducteur, respectivement un conducteur de bonne propriété mécanique, et un conducteur de bonne conductivité électrique.

De la sorte, lorsque le conducteur de bonne conductivité électrique se rompt localement, et compte tenu de son insertion dans un support textile sous forme tressée, tissée ou toronée, le relais de la conduction électrique est assurée par les fils de bonne propriété mécanique, ce qui permet ainsi d'assurer la continuité de la conduction d'électricité à un autre élément métallique bon conducteur de l'électricité.

Toutefois, il est à noter que ce résultat n'est possible qu'avec un support tressé, faute de quoi, il n'y a pas contact entre les différents conducteurs métalliques et le relais ne peut être assuré efficacement.
Et encore, même avec une telle configuration, la conduction n'est pas satisfaisante: voir par exemple dans le document FR-A-2 625 599, où une clôture électrique comporte un support au sein duquel sont tressés côte à côte un conducteur en acier inoxydable et un conducteur en cuivre, assurant de la sorte plusieurs points de contact entre ces conducteurs : la conduction n'est pas satisfaisante, compte tenu de la relative mobilité des fils les uns par rapport aux autres, attendu qu'ils sont montés en qualité de fils de chaîne.

En outre, le conducteur de moins bonne conductivité électrique affecte la conduction électrique globale, tendant au même résultat qu'une clôture électrique intégrant un conducteur métallique de type acier inoxydable.
Par ailleurs, l'élément conducteur de bonne conductivité électrique, et dans le cas d'espèce le cuivre ou l'aluminium, est au fil du temps attaqué par la corrosion, aboutissant à sa rupture en plusieurs points, affectant la conductivité électrique nécessaire pour électrifier de longues distances puisque, dans ce cas, seul l'acier inoxydable constitutif du conducteur de bonne propriété mécanique, remplit alors cette fonction, mais avec une baisse certaine de l'efficacité souhaitée.
On a également proposé, par exemple dans le document, FR-A-2 655 814, de mettre en oeuvre des fils conducteurs à base d'un alliage métallique binaire cuivre/cadmium, revêtu à sa périphérie d'une couche de nickel. Si, incontestablement, la mise en oeuvre de tels fils conducteurs permet d'aboutir à une certaine efficacité lorsqu'appliqués à l'électrification sur de grandes distances, cependant, celle-ci s'avère relativement onéreuse compte-tenu de l'alliage mis en oeuvre.
Enfin, on a proposé dans le document US-A-4 162 783 une clôture électrique comportant deux conducteurs, respectivement de charge et de terre, séparés l'un de l'autre au moyen d'une gaine isolante. Cependant, si certes les conducteurs électriques se trouvent ainsi protégés, il est nécessaire de mettre en oeuvre des éléments de contact, également métalliques, espacés périodiquement, chacun de ces éléments de contact étant lui-même en contact soit avec le fil de charge, soit avec le fil de terre, et ce de manière alternative. Il en résulte qu'afin d'aboutir à l'effet répulsif recherché, l'animal doit impérativement toucher deux éléments de contacts consécutifs.

L'objet de l'invention est donc de proposer une clôture électrique susceptible tout à la fois d'être mise en oeuvre sur des grandes distances, et ce, sans affecter la conductivité électrique en quelque point que ce soit de ladite clôture, et par ailleurs, susceptible d'être accessible à des prix raisonnables, tout en présentant des propriétés mécaniques propres à permettre de nombreuses ré-utilisations.

Cette clôture électrique comprend au moins un fil métallique continu conducteur de l'électricité, s'étendant selon toute la longeur de la clôture, et s'étendant selon toute la longueur de la clôture, et présentant de bonnes propriétés mécaniques, associé à un support. Elle intègre en outre un autre fil conducteur de l'électricité, de bonne conductivité électrique, gainé d'un matériau isolant, et ce, sur toute sa longueur, à l'exception de zones réparties à intervalles plus ou moins réguliers, où ledit fil conducteur est en contact direct ou indirect avec ledit fil métallique conducteur présentant de bonne propriétés mécaniques.

En d'autres termes, attendu que le fil gainé est un fil bon conducteur de l'électricité, l'invention consiste à mettre en oeuvre un ensemble constitué par au moins un fil métallique bon conducteur de l'électricité et des fils métalliques présentant des caractéristiques mécaniques élevées, et dans lequel le fil bon conducteur de l'électricité est gainé sur la plus grande partie de sa longueur de telle sorte à le protéger des attaques de corrosion inhérente au milieu extérieur, ou des dégâts susceptibles d'être occasionnés lors des dépliages et repliages successifs de la clôture.
Selon une forme de réalisation de l'invention, le support est constitué par le fil gainé constituant de la sorte un toron ou un cordon avec le fil métallique présentant de bonnes propriétés mécaniques.
Selon une autre forme de réalisation de l'invention, le support est constitué d'un ruban tissé, tressé ou tricoté, en un matériau isolant, avantageusement synthétique, ledit conducteur gainé constituant l'un des fils de chaîne.
Le contact entre les zones dépourvues de gaine dudit conducteur gainé et le ou les fils métalliques présentant de bonnes propriétés mécaniques s'effectue au moyen de plaques métalliques enserrant les différents conducteurs au niveau de la zone dépourvue de gaine dudit conducteur a bonne conductivité électrique, par exemple à chaque extrémité.
Avantageusement, la gaine du conducteur gainé est traitée anti-UV.

La manière dont l'invention peut être réalisée et les avantages qui en découlent ressortiront mieux des exemples de réalisation qui suivent, donnés à titre indicatif et non limitatif à l'appui des figures annexées.
La figure 1 est une vue schématique représentant un toron conforme à l'invention.
La figure 2 est une représentation schématique représentant un ruban conforme à une autre forme de réalisation de l'invention.
La figure 3 est une vue analogue à la figure 2, en vue partiellement éclatée.
La figure 4 est une représentation schématique d'une plaque métallique assurant la conduction entre l'élément gainé et les fils conducteurs présentant de bonnes propriétés mécaniques.

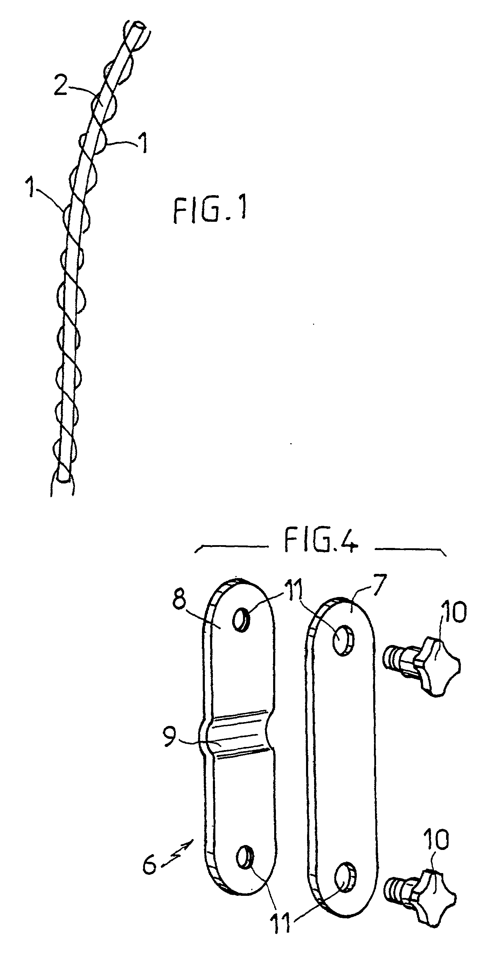

On a représenté au sein de la figure 1 un toron ou cordon conforme à la présente invention. Ce toron comporte fondamentalement des fils métalliques (1), réalisés en acier inoxydable, et développant de fait de bonnes propriétés mécaniques, notamment en charge de rupture et en capacité d'allongement. Ces fils métalliques en acier inoxydable entourent un fil métallique (2), gainé de matière plastique. Ce fil métallique (2) est avantageusement constitué de cuivre ou d'aluminium, présentant de manière connue une bonne conductivité électrique. Il présente sur toute sa longueur, un gainage plastique, interrompu, par exemple au niveau des zones de fixation du toron ainsi constitué sur les isolateurs électriques, ou au niveau de chacune des connexions entre deux bobines consécutives. A ce niveau, les zones dénudées du fil de cuivre entrent donc en contact avec les fils en acier inoxydable, assurant de la sorte un relais de la conduction électrique, et rehaussant la tension disponible au niveau des dits fils en acier inoxydable, sensiblement au niveau de la tension nominale disponible en sortie de l'électrificateur, à la borne de sortie duquel est connecté le toron, à la diminution près de la tension inhérente à sa propre résistance.

Dans le cas d'espèce, le conducteur gainé (2) joue également le rôle de support pour la clôture électrique.

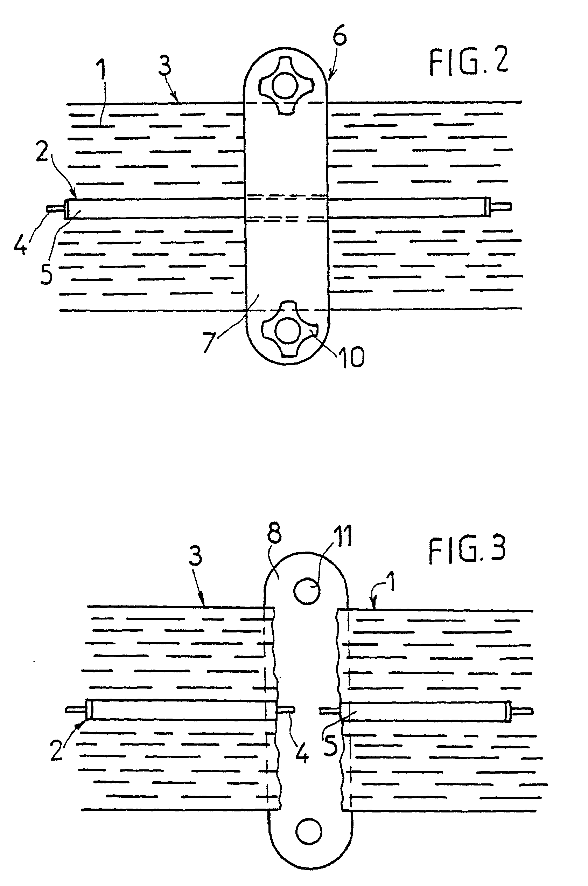

Dans la forme de réalisation représentée en liaison avec les figures 2 et 3, la clôture électrique se présente sous la forme d'un ruban (3), à base de fils plastiques tissés, tressés ou tricotés, donc non conducteurs de l'électricité.

Ce ruban (3) intègre en fil de chaîne des éléments conducteurs métalliques (1) en acier inoxydable, et apparaît donc à intervalles plus ou moins réguliers sur l'une et l'autre des surfaces dudit ruban.

Avantageusement, ces rubans sont teintés dans la masse, de couleur voyante, de telle sorte à attirer l'attention des animaux destinés à être parqués au moyen de ladite clôture.

Ce ruban comporte en outre un fil de cuivre (4) gainé sur la majorité de sa longueur au moyen d'une gaine (5) et fixé au ruban par couture. Dans une autre variante, ce fil (2) peut constituer l'un des fils de chaîne du ruban (3).

A intervalles plus ou moins réguliers, le fil de cuivre (4) est dénudé, par exemple au niveau du lieu de fixation du ruban sur les isolateurs, ou du lieu de connexions de deux bobines entre elles.

A ce niveau, des plaques métalliques (6) viennent enserrer le ruban et les parties dénudées du conducteur (4), de telle sorte à ainsi assurer le relais de l'électricité au niveau des conducteurs métalliques (1). Ainsi, à intervalles réguliers, compte-tenu de la faible résistivité électrique du cuivre constitutif de l'élément conducteur (4), la tension en son sein demeure à peu près constante, et correspond sensiblement à celle délivrée par l'électrificateur, de sorte qu'elle est appliquée aux conducteurs réalisés en acier inoxydable à intervalles réguliers, pour pouvoir ainsi disposer d'une tension quasi nominale en tous points du ruban.

La clôture électrique ainsi réalisée présente donc, quel que soit son positionnement, une tension élevée assez proche de la tension délivrée par l'électrificateur, de par le relais assuré par le conducteur métallique gainé (4).

On a représenté au sein de la figure 4, une plaque métallique (6) conforme à l'exemple de réalisation de l'invention.

Typiquement, cette plaque (6) est en fait constituée de deux plaques (7) et (8), dont l'une (8) présente une déformation hémi - cylindrique (9) propre à loger le fil gainé (2).

Ces deux plaques (7) et (8) sont solidarisées l'une à l'autre de manière ferme au moyen d'écrous (10), venant se visser dans des orifices filetés (11) prévus à cet effet.

Ainsi, on obtient une clôture électrique de faible coût de revient, présentant des caractéristiques électriques compatibles avec les applications envisagées, y compris pour des clôtures de longue distance, sans risque de corrosion, et permettant de nombreuses réutilisations.

## Revendications

1. Clôture électrique comprenant au moins un fil métallique continu (1) conducteur de l'électricité, s'étendant selon toute la longueur de la clôture, et présentant de bonnes propriétés mécaniques, associé à un support, et intégrant en outre au moins un autre fil conducteur de l'électricité (4), de bonne conductivité électrique, **caractérisée en ce que** ledit fil conducteur est gainé d'un matériau isolant (5), et ce sur toute sa longueur, à l'exception de zones réparties à intervalles plus ou moins réguliers, où ledit fil conducteur (4) est en contact direct ou indirect avec le ou lesdits fils métalliques conducteurs (1) présentant de bonne propriétés mécaniques.

2. Clôture électrique selon la revendication 1, ***caractérisée* en ce que** le ou les fils métalliques (1) présentant de bonnes propriétés mécaniques, notamment en charge de rupture et en capacité d'allongement, sont réalisés en acier inoxydable.

3. Clôture électrique selon l'une des revendications 1 et 2, ***caractérisée* en ce que** le ou les fils conducteurs métalliques (4) présentant une bonne conductivité électrique sont réalisés en cuivre ou en aluminium.

4. Clôture électrique selon l'une des revendications 1 à 3, ***caractérisée* en ce que** le support est constitué par le fil gainé (2) constituant de la sorte avec le fil métallique (1) présentant de bonnes propriétés mécaniques un toron ou un cordon.

5. Clôture électrique selon l'une des revendications 1 à 3, ***caractérisée* en ce que** le support est constitué d'un ruban tissé, tressé ou tricoté (3), réalisé en un matériau isolant, avantageusement synthétique.

6. Clôture électrique selon la revendication 5, ***caractérisée* en ce que** le conducteur gainé (2) constitue l'un des fils de chaîne du support (3).

7. Clôture électrique selon l'une des revendications 1 à 6, ***caractérisée* en ce que** le contact entre les zones dénudées dudit conducteur gainé (2) et le ou les fils métalliques (1) présentant de bonnes propriétés mécaniques s'effectue au moyen de plaques métalliques (6, 7, 8) enserrant les différents conducteurs au niveau de ladite zone dénudée dudit conducteur présentant une bonne conductivité électrique (4).

8. Clôture électrique selon la revendication 7, ***caractérisée* en ce que** l'une des plaques (7, 8) présente un logement (9) hémicylindrique, destiné à recevoir le fil gainé (2).

9. Clôture électrique selon l'une des revendications 1 à 8, ***caractérisée* en ce que** la gaine (5) du conducteur gainé (4) est traitée anti-UV.

## Claims

1. Electric fence comprising at least one electrically conducting metal wire (1) extending over the whole length of the fence, and provided with good mechanical properties, associated with a support, and further incorporating at least one other electrically conducting wire (4) with good electrical conductivity, **characterized in that** said conducting wire (4) is sheathed with an insulating material (5) over its entire length except for zones distributed at more or less regular intervals where the said conducting wire (4) is in direct or indirect contact with the said conducting metal wire or wires (1) with good mechanical properties.

2. Electric fence according to Claim 1, **characterized in that** the metal wire or wires (1) with good mechanical properties, particularly in terms of breaking stress and elongation, are made of stainless steel.

3. Electric fence according to one of Claims 1 and 2, **characterized in that** the metal conducting wire or wires (4) with good electrical conductivity are made of copper or aluminium.

4. Electric fence according to one of Claims 1 to 3, **characterized in that** the support consists of the sheathed wire (2) thereby forming, with the metal wire (1) with good mechanical properties, a strand or a rope.

5. Electric fence according to one of Claims 1 to 3, **characterized in that** the support consists of a woven, braided or knitted tape (3) made of an insulating, advantageously synthetic, material.

6. Electric fence according to Claim 5, **characterized in that** the sheathed conductor (2) constitutes one of the warp filaments of the support (3).

7. Electric fence according to one of Claims 1 to 6, **characterized in that** contact between the bared zones of the said sheathed conductor (2) and the metal wire or wires (1) with good mechanical properties is by means of metal plates (6, 7, 8) clamping the various conductors at the said bared zone of the said conductor with good electrical conductivity (4).

8. Electric fence according to Claim 7, **characterized in that** one of the plates (7, 8) has a semicylindrical housing (9) intended to .house the sheathed wire (2).

9. Electric fence according to one of Claims 1 to 8, **characterized in that** the sheath (5) of the sheathed conductor (4) is anti-UV treated.

## Patentansprüche

1. Elektrozaun mit mindestens einem durchgehenden, elektrisch leitenden metallischen Draht (1), der sich über die gesamte Länge des Zauns erstreckt und gute mechanische Eigenschaften aufweist, welcher mit einem Träger verbunden ist, wobei der Zaun ferner mindestens einen weiteren elektrisch leitenden Draht (4) mit einer guten elektrischen Leitfähigkeit aufweist, **dadurch gekennzeichnet, daß** der genannte gut leitende Draht mit einem Isoliermaterial (5) umhüllt ist, und zwar über seine gesamte Länge mit Ausnahme von in mehr oder weniger regelmäßigen Intervallen verteilten Zonen, in denen der genannte leitende Draht (4) in direktem oder indirektem Kontakt mit dem oder den genannten leitenden metallischen Drähten (1) mit guten mechanischen Eigenschaften steht.

2. Elektrozaun nach Anspruch 1, **dadurch gekennzeichnet, daß** der oder die metallischen Drähte (1) mit guten mechanischen Eigenschaften, insbesondere in bezug auf Bruchlast und Dehnfähigkeit, aus rostfreiem Stahl hergestellt sind.

3. Elektrozaun nach einem der Ansprüche 1 und 2, **dadurch gekennzeichnet, daß** der oder die metallischen leitenden Drähte (4) mit guter elektrischer Leitfähigkeit aus Kupfer oder Aluminium hergestellt sind.

4. Elektrozaun nach einem der Ansprüche 1 bis 3, **dadurch gekennzeichnet, daß** der Träger von dem umhüllten Draht (2) gebildet ist, der auf diese Weise mit dem metallischen Draht (1) mit guten mechanischen Eigenschaften eine Litze oder ein Seil bildet.

5. Elektrozaun nach einem der Ansprüche 1 bis 3, **dadurch gekennzeichnet, daß** der Träger von einem gewebten, geflochtenen oder gemaschten Band (3), welches aus einem vorteilhafterweise synthetischen Isoliermaterial hergestellt ist, gebildet ist.

6. Elektrozaun nach Anspruch 5, **dadurch gekennzeichnet, daß** der umhüllte Leiter (2) einen der Kettfäden des Trägers (3) bildet.

7. Elektrozaun nach einem der Ansprüche 1 bis 6, **dadurch gekennzeichnet, daß** der Kontakt zwischen den freigelegten Zonen des genannten umhüllten Leiters (2) und dem oder den metallischen Drähten (1) mit guten mechanischen Eigenschaften mittels metallischer Platten (6,7,8) erfolgt, welche die verschiedenen Leiter im Bereich der genannten freigelegten Zone des genannten Leiters mit einer guten elektrischen Leitfähigkeit (4) einspannen.

8. Elektrozaun nach Anspruch 7, **dadurch gekennzeichnet, daß** eine der Platten (7,8) eine halbzylindrische Aufnahme (9) zur Aufnahme des umhüllten Drahts (2) aufweist.

9. Elektrozaun nach einem der Ansprüche 1 bis 8, **dadurch gekennzeichnet, daß** die Hülle (5) des umhüllten Leiters (4) anti-UV-behandelt ist.
